# EUROPÄISCHE PATENTANMELDUNG

(11) **EP 3 778 301 A1**
(43) Veröffentlichungstag der Anmeldung: **17.02.2021**
(21) Anmeldenummer: 20020342.0
(22) Anmeldetag: 29.07.2020
(51) Int. Cl.: B60P 3/38

(54) **WOHNRAUM UND FAHRZEUG**

(30) Priorität: 13.08.2019 DE 102019005779; 25.10.2019 DE 102019007574
(71) Anmelder: Gosch, Claus, 21279 Wenzendorf (DE)
(72) Erfinder: Gosch, Claus, 21279 Wenzendorf (DE)

(57) **Zusammenfassung**

Wohnraum (2) mit einem ersten Anbindungsbereich (4a) und einem aufblasbaren und/oder evakuierbaren plattenförmigen Volumenelement (6). Das Volumenelement ist aus einer ersten flexiblen Deckschicht (10a) sowie einer zweiten flexiblen Deckschicht (10b) und einer dazwischen angeordneten Zwischenstruktur (14) gebildet. Die Zwischenstruktur (14) ist ausgebildet, die erste Deckschicht (10a) mit der zweiten Deckschicht (10b) derart mechanisch zu koppeln, dass in einem aufgeblasenen und/oder evakuierten Zustand die erste Deckschicht (10a) von der zweiten Deckschicht (10b) vorgegeben beabstandet ist. Das Volumenelement (6) weist ferner eine erste Kante (8a) auf. Das Volumenelement (6) ist mit der ersten Kante (8a) und/oder mit einem zu der ersten Kante (8a) angrenzenden ersten Befestigungsbereich (5a) der ersten oder zweiten Deckschicht (10a, 10b) mit dem ersten Anbindungsbereich (4a) des Wohnraumes (2) direkt und/oder mittels eines ersten Kopplungselementes (16a) koppelbar. Bei einer Kopplung mittels des ersten Befestigungsbereiches (5a) erstreckt sich dieser ausgehend von der ersten Kante (8a, 8b, 9a, 9b) nur zum Teil über die Gesamtlänge und/oder Gesamtbreite des Volumenelementes (6).

## Beschreibung

Die Erfindung betrifft einen Wohnraum mit einem Volumenelement und ein Fahrzeug mit einem solchen Wohnraum.

Die WO2017/201555 offenbart ein Zelt umfassend ein Traggerüst, welches auf einem Zeltboden befestigt ist. Der Zeltboden ist aus einem aufblasbaren, plattenartigen Körper gebildet. An dem Traggerüst ist eine Zelthaut angebracht. Das Zelt soll als Dachzelt dienen, das auf einem Dach eines Fahrzeugs befestigt wird. Dabei dient die Zelthaut als Schutz vor Witterungseinflüssen, wenn eine Person in dem Zelt übernachtet. Der plattenartige Körper weist eine Deck- und Bodenlage auf, die durch eine Vielzahl von Verbindungsfäden verbunden sind.

Die DE102012103948 offenbart einen Körper mit einer Innenkammer, die mit einem Gas aufblasbar ist. Ferner weist der Körper eine Außenkammer auf, die mit einem granularen Material gefüllt ist. Die Außenkammer ist entlüftbar bzw. evakuierbar ausgebildet und kann somit mit einem Unterdruck beaufschlagt werden. Ist die Innenkammer aufgeblasen und die Außenkammer evakuiert, ergibt sich ein Körper mit hoher Steifigkeit.

Die Aufgabe, die der Erfindung zugrunde liegt, ist es, einen möglichst flexibel ausgestaltbaren Wohnraum vorzuschlagen, in dem funktionale Elemente möglichst leicht aber gleichzeitig druck- und biegesteif ausgebildet sind.

Die Aufgabe wird gelöst durch die Merkmale der unabhängigen Patentansprüche. Vorteilhafte Ausgestaltungen der Erfindung sind in den Unteransprüchen angegeben.

Die Erfindung zeichnet sich gemäß einem ersten Aspekt aus durch einen Wohnraum mit einem ersten Anbindungsbereich und einem aufblasbaren und/oder evakuierbaren plattenförmigen Volumenelement. Das Volumenelement ist aus einer ersten flexiblen Deckschicht sowie einer zweiten flexiblen Deckschicht und einer dazwischen angeordneten Zwischenstruktur gebildet. Die Zwischenstruktur ist ausgebildet, die erste Deckschicht mit der zweiten Deckschicht derart mechanisch zu koppeln, dass in einem aufgeblasenen und/oder evakuierten Zustand die erste Deckschicht von der zweiten Deckschicht vorgegeben beabstandet ist. Das Volumenelement weist ferner eine erste Kante auf und ist mit dieser und/oder mit einem zu der ersten Kante angrenzenden ersten Befestigungsbereich der ersten oder zweiten Deckschicht direkt und/oder mittels eines ersten Kopplungselementes mit dem ersten Anbindungsbereich des Wohnraumes koppelbar. Dabei erstreckt sich bei einer Kopplung mittels des ersten Befestigungsbereiches dieser ausgehend von der ersten Kante nur zum Teil über die Gesamtlänge und/oder Gesamtbreite des Volumenelementes.

Das Volumenelement kann als funktionales Element in dem Wohnraum benutzt werden und somit in einer waagerechten Anordnung z.B. als Bett, Tisch oder Sitzgelegenheit genutzt werden. Dabei kann das Volumenelement in den aufgeblasenen und/oder evakuierten Zustand in seinen Nutzungszustand gebracht werden, wenn das Volumenelement benötigt wird. Andernfalls kann das Volumenelement in einem erschlafften Zustand sehr flexibel und auf ein relativ kleines Packmaß gefaltet oder zusammengerollt und damit leicht transportiert oder platzsparend in dem Wohnraum verstaut oder gelagert werden, so dass der nutzbare Raum vergrößert werden kann. Das Volumenelement kann beispielsweise auch senkrecht, so z.B. als Zwischenwand in dem Wohnraum angeordnet sein. Um einen erschlafften Zustand einzunehmen, ist der aufgeblasene Anteil des Volumenelementes zu entlüften. Darüberhinaus kann das Volumenelement auch teilweise evakuierbar sein, um durch die Beaufschlagung mit einem Unterdruck seinen Nutzungszustand einzunehmen. Um einen erschlafften Zustand einzunehmen, ist der evakuierte Anteil des Volumenelementes zu belüften. Natürlich kann das Volumenelement auch entweder aufblasbar oder evakuierbar sein, um den Nutzungszustand einzunehmen.

Das Volumenelement weist typischerweise eine Länge und eine Breite auf, die jeweils größer ist als eine Dicke des Elementes. Das Volumenelement bildet somit ein plattenförmiges Element.

Unter einem Wohnraum ist jeder Raum zu verstehen, in dem sich eine Person aufhalten kann. Dabei kann es sich um einen ortsfesten als auch einen mobilen Wohnraum handeln, der z.B. eine fahrbare oder wie auch immer geartete mobile Struktur aufweist.

Der Aufbau des Volumenelementes mit der ersten und zweiten Deckschicht und der dazwischen angeordneten Zwischenstruktur ermöglicht im aufgeblasenen und/oder evakuierten Nutzungszustand ein steifes und formstabiles Element, auch unter Belastung. Um einen aufblasbaren und/oder evakuierbaren Raum in der Zwischenstruktur zwischen der ersten und zweiten Deckschicht zu ermöglichen, sind die Kanten beispielsweise mittels einer Abschlusslasche versiegelt. Diese Abschlusslasche verläuft dabei vorzugsweise im Bereich der jeweiligen Kante zwischen der ersten und zweiten Deckschicht und ist an dieser jeweils fluiddicht befestigt, so z.B. verklebt, vernäht und/oder verschweißt. Die Abschlusslasche ist vorzugsweise aus dem gleichen Material und kann den gleichen Aufbau aufweisen als die erste oder zweite Deckschicht.

Vorzugsweise ist die jeweilige Deckschicht aus einem Kunststoffmaterial, so z.B. PVC, Polycotton oder Nylon gebildet In dem aufgeblasenen und/oder evakuierten Zustand umfasst die jeweilige Deckschicht keine großflächigen Wölbungen und/oder großflächige Vertiefungen, weist also eine im Wesentlichen glatte, kontinuierlich verlaufende Oberfläche auf. Vorzugsweise ist die Zwischenstruktur ausgebildet, die erste und die zweite Deckschicht derart mechanisch derart zu koppeln, dass in einem aufgeblasenen und/oder evakuierten Zustand die erste Deckschicht zu der zweiten Deckschicht über die Erstreckung der Zwischenstruktur vorgegeben beabstandet ist. Dabei kann der Abstand über die Erstreckung der Zwischenstruktur konstant sein. Wesentlich ist hier, dass dieser vorgegebene Abstand zwischen der ersten und zweiten Deckschicht auch bei einer Belastung im Wesentlichen unverändert bleibt.

Die Zwischenschicht erstreckt sich im Wesentlichen über die gesamte Erstreckung des Volumenelementes. Damit kann mittels der Zwischenstruktur gewährleistet werden, dass der vorgegebene Abstand zwischen der ersten und zweiten Deckschicht in einem weiten Über- und/oder Unterdruckbereich über die Erstreckung des Volumenelementes eingehalten werden kann, ohne dass Wölbungen und/oder Vertiefungen auftreten. Gleichzeitig geht damit eine hohe Druckfestigkeit und Biegesteifigkeit des Volumenelementes einher. Auch kann das Volumenelement besonders stark belastet werden, so z.B. als Bett oder Sitzgelegenheit für ein oder mehrere Personen.

Das Volumenelement weist vorzugsweise eine oder mehrere Kanten auf, die sich jeweils in Dickenrichtung des Volumenelementes erstrecken. Und mit zumindest einer Kante, die sogenannte erste Kante, ist das Volumenelement mit dem ersten Anbindungsbereich des Wohnraumes koppelbar. Der zu der ersten Kante angrenzende erste Befestigungsbereich erstreckt sich von der ersten Kante ausgehend nur zum Teil über die Gesamtbreite und/oder nur zum Teil über die Gesamtlänge des Volumenelementes. So erstreckt sich der erste Befestigungsbereich beispielsweise über eine Breite von mindestens 5 cm ab der zugeordneten Kante und in Längsrichtung und/oder Querrichtung des Volumenelementes zumindest teilweise über die Länge und/oder Breite des Volumenelementes. Der jeweilige Befestigungsbereich ist der ersten und/oder zweiten Deckschicht zugeordnet, je nach dem, mit welcher oder welchen Seiten das Volumenelement mit dem ersten Anbindungsbereich gekoppelt werden soll.

Vorzugsweise ist das Volumenelement werkzeuglos mit bzw. von dem ersten Anbindungsbereich koppel- bzw. entkoppelbar, so dass eine einfache und flexible Verwendung des Volumenelementes in dem Wohnraum ermöglicht wird. So kann das Volumenelement beispielsweise mittels eines Reiß- oder Klettverschlusses oder mittels Gurten, Ketten und Ringen mit dem jeweiligen Anbindungsbereich gekoppelt sein. Besonders vorteilhaft ist die Kopplung, wenn diese auch die Möglichkeit einer werkzeuglosen Längenveränderung bietet, so z.B. durch einen Spanngurt.

Dabei kann die Kopplung der ersten Kante oder des zugeordneten ersten Befestigungsbereiches mit dem ersten Anbindungsbereich direkt erfolgen. Das heißt, die erste Kante und/oder der zugeordnete erste Befestigungsbereich sind mit dem ersten Anbindungsbereich derart in Kontakt, so dass Kräfte, die auf das Volumenelement wirken, zumindest teilweise über den ersten Anbindungsbereich abgeleitet werden können. Die erste Kante und/oder der zugeordnete erste Befestigungsbereich kann dabei beispielsweise an dem ersten Anbindungsbereich direkt befestigt, so z.B. verschraubt, gelagert, eingehakt, sein. Alternativ oder zusätzlich kann das Volumenelement aber auch mittels des ersten Kopplungselementes mit dem ersten Anbindungsbereich gekoppelt sein. In diesem Fall ist das Volumenelement nicht direkt mit dem ersten Anbindungsbereich in Kontakt, sondern mittels des ersten Kopplungselementes. Hier werden dann die auf das Volumenelement wirkenden Kräfte mittels des ersten Kopplungselementes über den ersten Anbindungsbereich abgeleitet.

Erfolgt eine Kopplung mit dem ersten Anbindungsbereich an einer Ecke oder im Bereich einer Ecke des Volumenelementes, so ist diese Kopplung beiden die Ecke bildenden Kanten des Volumenelementes zugeordnet.

"Aufblasbar" bedeutet in diesem Zusammenhang, dass das Volumenelement mit einem Gas, so z.B Luft, befüllbar und somit zumindest teilweise mit einem Überdruck beaufschlagbar ist, um seinen Nutzungszustand einzunehmen. "Evakuierbar" bedeutet dagegen, dass das Volumenelement zumindest teilweise mit einem Unterdruck beaufschlagbar ist, um seinen Nutzungszustand einzunehmen.

In einer vorteilhaften Ausgestaltung des ersten Aspekts sind der Zwischenstruktur des Volumenelementes mehrere fluidisch getrennte Kammern zugeordnet.

Jede Kammer ist separat entweder aufblasbar oder evakuierbar. Dazu kann jeder Kammer zumindest ein Ventil zugeordnet sein.

In einer weiteren vorteilhaften Ausgestaltung des ersten Aspekts umfasst die Zwischenstruktur zumindest eine erste Kammer, die mit einem Überdruck beaufschlagbar ist, und zumindest eine zweite Kammer, die mit einem Granulat gefüllt und mit einem Unterdruck beaufschlagbar ist. Die erste Kammer ist von der zweiten Kammer fluidisch getrennt.

Zumindest eine erste Kammer ist mit einem vorgegebenen Überdruck und eine zweite Kammer mit einem vorgegebenen Unterdruck beaufschlagbar. Beispielsweise umfasst die Zwischenstruktur mehrere erste Kammern und mehrere zweite Kammern. Die zumindest eine zweite Kammer ist vorzugsweise mit einem Granulat gefüllt. Dadurch wird in einem evakuierten Zustand der zumindest einen zweiten Kammer eine hohe Reibung zwischen den Granulatpartikeln erreicht, woraus eine hohe Steifigkeit insbesondere Drucksteifigkeit und Biegesteifigkeit dieser zumindest einen zweiten Kammer resultiert. In diesem Fall repräsentiert das Granulat in der zumindest einen zweiten Kammer im evakuierten Zustand zusätzlich die mechanische Kopplung zwischen der ersten und zweiten Deckschicht. Das Granulat in der zumindest einen zweiten Kammer kann beispielsweise als Kunststoff- oder Biogranulat ausgebildet sein. Besonders vorteilhaft ist eine Ausgestaltung in der zumindest eine zweite Kammer über die Längserstreckung des Volumenelementes verläuft. Die zumindest eine erste und die zumindest eine zweite Kammer und die zugeordneten Kammerwände repräsentieren dabei eine weitere mechanische Kopplung zwischen der ersten und zweiten Deckschicht. In dieser Ausgestaltung ist die Zwischenstruktur vorzugsweise ausgebildet, die erste und die zweite Deckschicht derart mechanisch zu koppeln, dass im aufgeblasenen und evakuierten Zustand die erste und zweite Deckschicht über die Erstreckung der Zwischenstruktur im Wesentlichen parallel verlaufen.

In einer weiteren vorteilhaften Ausgestaltung des ersten Aspekts ist die Zwischenstruktur derart ausgebildet, dass zwischen der ersten Deckschicht und der zweiten Deckschicht eine Vielzahl gleichlanger Stabilisierungsfäden verlaufen. Eine solche Ausführung entspricht einer sogenannten Drop-Stitch Struktur mit einer Vielzahl von Stabilisierungsfäden zwischen der ersten und zweiten Deckschicht. Auch bietet ein solcher Aufbau des Volumenelementes eine hohe Formstabilität und weist gleichzeitig eine hohe Reißfestigkeit auf. Vorzugsweise wird das Volumenelement mit einer Drop-Stitch Struktur mit einem Überdruck beaufschlagt. Dabei kann mit einer Drop-Stitch Struktur auch bei einem sehr hohen Überdruck die vorgegebene Form des Volumenelementes beibehalten werden. Dabei können der Zwischenstruktur ein oder mehrere Kammern zugeordnet sein. Sofern der Zwischenstruktur mehrere Kammern zugeordnet und diese jeweils als Drop-Stitch Struktur ausgeführt sind, kann durch die Beaufschlagung unterschiedlich vorgegebener Überdrücke über die Kammern verteilt das Volumenelement an seine gewünschte Verwendung angepasst werden. Vorzugsweise kann das Volumenelement oder einzelne Kammern mit der Drop-Stitch Struktur jeweils auf einen Überdruckbereich, so z.B. zwischen 0,3 und 2 Bar, aufgeblasen werden.

Die Stabilisierungsfäden bilden die mechanische Kopplung zwischen der ersten und zweiten Deckschicht. Die Länge der Stabilisierungsfäden gibt dabei im Wesentlich die Dicke des Volumenelementes über seine Erstreckung vor. Vorzugsweise beträgt die Dicke des Volumenelementes etwa 10 cm. Aber auch Dicken von 15 oder 20 cm sind beispielsweise möglich. In dieser Ausgestaltung ist die Zwischenstruktur vorzugsweise ausgebildet, die erste und die zweite Deckschicht derart mechanisch zu koppeln, dass im aufgeblasenen Zustand die erste und zweite Deckschicht über die Erstreckung der Zwischenstruktur im Wesentlichen parallel verlaufen.

In einer weiteren vorteilhaften Ausgestaltung des ersten Aspekts umfasst das Volumenelement zumindest einen Ring Patch an der ersten Kante und/oder an dem zu der ersten Kante angrenzenden ersten Befestigungsbereich. Mittels dieser Ring-Patches ist das Volumenelement direkt mit dem ersten Anbindungsbereich koppelbar. Ring Patches sind Befestigungselemente, die sehr einfach an dem Volumenelement angeordnet und befestigt werden können. Diese bestehen typischerweise aus einem ringförmigen Element aus Metall, so z.B. einen D-förmigen Ring (sogenannter D-Ring), und einer Ringaufnahme, in oder an die der Ring befestigt ist. Die Ringaufnahme ist vorzugsweise flächig ausgeführt und kann an der ersten Kante oder dem zugeordneten ersten Befestigungsbereich befestigt, so z.B. flächig verklebt, werden. Damit ist der Ring Patch eine Komponente des Volumenelementes, womit der Ring dann mit dem ersten Anbindungsbereich direkt gekoppelt werden kann. Alternativ kann an dem Ring Patch aber auch ein Kopplungselement befestigt werden und das Volumenelement indirekt mittels des Kopplungselementes an dem ersten Anbindungsbereich gekoppelt werden.

In einer weiteren vorteilhaften Ausgestaltung des ersten Aspekts ist die Koppelbarkeit zwischen Volumenelement und erstem Anbindungsbereich derart ausgebildet, dass das Volumenelement mittels des ersten Befestigungsbereiches an dem ersten Anbindungsbereich direkt abstützbar ist. Dies entspricht einer direkten Kopplung zwischen Volumenelement und dem ersten Anbindungsbereich des Wohnraumes. Der erste Anbindungsbereich kann beispielsweise als ein in den Wohnraum hineinragendes Element, so z.B. als eine Stufe oder als eine Auflage oder als ein Haken, ausgebildet sein. Auf diesem ersten Anbindungsbereich liegt dann das Volumenelement direkt auf oder ist mit diesem befestigt, so dass Kräfte, die auf das Volumenelement wirken, direkt über den ersten Anbindungsbereich abgeleitet werden können. In dieser Ausgestaltung ist die tragende Struktur des Wohnraumes beispielsweise als Wand und/oder Bestandteil einer Decke ausgebildet, dem der erste Anbindungsbereich zugeordnet ist.

In einer weiteren vorteilhaften Ausgestaltung des ersten Aspekts weist das Volumenelement zumindest ein Stabilisierungselement vorgegebener Länge und Breite auf, das auf oder in der ersten oder zweiten Deckschicht angeordnet und in Längs- und/oder Querrichtung verläuft und dabei ausgebildet ist, im Nutzungszustand des Volumenelementes eine zusätzliche Steifigkeit des Volumenelementes zu bewirken. Das bedeutet, dass das zumindest eine Stabilisierungselement in der Ebene der ersten oder zweiten Deckschicht in Längs- und/oder Querrichtung verläuft. Grds. ist es natürlich auch möglich, dass das zumindest eine Stabilisierungselement in der Ebene der jeweils zugeordneten Deckschicht schräg oder diagonal verläuft. Wenn mehrere Stabilisierungselemente verwendet werden, können diese sowohl auf oder in der ersten und der zweiten Deckschicht angeordnet sein. Das zumindest eine Stabilisierungselement ist beispielsweise flexibel ausgebildet und weist ein hohes Elastizitätsmodul und eine hohe Zugfestigkeit auf und bewirkt damit eine zusätzliche Steifigkeit des Volumenelementes. Beispielsweise ist das Stabilisierungselement als ein Faserband oder Faserstreifen ausgebildet, das bzw. der Fasern umfasst, die in Faserrichtung ein hohes Elastizitätsmodul aufweisen und besonders zugfest sind. Beispielsweise kann das Faserband oder der Faserstreifen synthetische Fasern wie z.B. Aramid-, Polyethylen-, CFK/ GFK-Fasern, oder Naturfasern, wie z.B. Baumwoll- oder Hanffasern, umfassen. Die Breite des Faserbandes oder Faserstreifens kann beispielsweise zwischen einigen Millimetern bis zu einigen Zentimetern liegen und sich in Quer- und/oder Längsrichtung erstrecken. Alternativ kann das Stabilisierungselement auch großflächig als Faserlage ausgebildet sein und auf oder in zumindest einer der Deckschichten angeordnet sein. Wird beispielsweise das Volumenelement auf einer Seite belastet, so kann das Stabilisierungselement auf der der Belastung gegenüberliegenden Seite des Volumenelementes auf oder in der zugeordneten Deckschicht angeordnet bzw. integriert sein. Dadurch wirkt das Stabilisierungselement der Belastung aufgrund des hohen Elastizitätsmoduls und der Zugfestigkeit entgegen. Eine aus der Belastung resultierende Durchbiegung des Volumenelementes kann dadurch reduziert werden. Typischerweise ist ein Maß der Reduktion der Durchbiegung des Volumenelementes unter anderem abhängig von der Art des Stabilisierungselementes, so z.B. der Faserart, und der Anzahl der Stabilisierungselemente. Auch kann beispielsweise das zumindest eine in Querrichtung verlaufende Stabilisierungselement auf oder in der ersten Deckschicht und das zumindest eine in Längsrichtung verlaufende Stabilisierungselement auf oder in der zweiten Deckschicht angeordnet sein, oder vice versa. Auch die Anordnung des zumindest einen in Querrichtung und des zumindest einen in Längsrichtung verlaufenden Stabilisierungselementes auf oder in jeweils einer Deckschicht ist möglich.

In einer weiteren vorteilhaften Ausgestaltung des ersten Aspekts ist dem Wohnraum ein zweiter Anbindungsbereich zugeordnet. Das Volumenelement weist eine zweite Kante auf, die sich von der ersten Kante unterscheidet. Das Volumenelement ist mit der zweiten Kante und/oder mit einem zu der zweiten Kante angrenzenden zweiten Befestigungsbereich der ersten oder zweiten Deckschicht mit dem zweiten Anbindungsbereich des Wohnraumes direkt und/oder mittels eines zweiten Kopplungselementes koppelbar. In dieser Ausführung ist das Volumenelement an zwei beabstandeten Anbindungsbereichen befestigt. Aufgrund der Biegesteifigkeit des Volumenelementes im aufgeblasenen und/oder evakuierten Zustand ist ein weiteres Gestell oder eine Stütze zum Stützen des Volumenelementes in der Regel nicht erforderlich. Somit kann ohne großen Aufwand das Volumenelement als funktionales Element flexibel und einfach in dem Wohnraum benutzt werden. Ist eine Verwendung nicht weiter erforderlich, kann das Volumenelement von dem ersten und/oder zweiten Anbindungsbereich getrennt und dann platzsparend im erschlafften Zustand verstaut werden. Der zu der zweiten Kante angrenzende zweite Befestigungsbereich erstreckt sich von der zweiten Kante ausgehend nur zum Teil über die Gesamtbreite und/oder Gesamtlänge des Volumenelementes. So erstreckt sich der zweite Befestigungsbereich beispielsweise über eine Breite von mindestens 5 cm ab der zugeordneten Kante und in Längsrichtung und/oder Querrichtung des Volumenelementes zumindest teilweise über die Länge und/oder Breite des Volumenelementes.

Auch hier gilt, dass, wenn eine Kopplung mit dem zweiten Anbindungsbereich an einer Ecke oder im Bereich einer Ecke des Volumenelementes erfolgt, so ist diese Kopplung beiden die Ecke bildenden Kanten des Volumenelementes zugeordnet.

In einer weiteren vorteilhaften Ausgestaltung des ersten Aspekts ist der erste und/oder zweite Anbindungsbereich einer Wand oder einer Decke oder einem Boden des Wohnraumes zugeordnet. Auch kann der erste und/oder zweite Anbindungsbereich nur einer Wand und/oder Decke zugeordnet sein. Auch kann der erste und/oder zweite Anbindungsbereich einem Übergang von einer Wand zu einer Decke oder von einer Wand zu dem Boden zugeordnet sein. Auch kann die Wand- oder die Decke oder der Boden als Zwischenwand bzw. Zwischendecke bzw. Zwischenboden ausgebildet sein. Dies hat den Vorteil, dass das Volumenelement sehr flexibel nutzbar und nur bei Bedarf verwendbar ist. Dazu ist das Volumenelement vorzugsweise werkzeuglos an bzw. von dem ersten und/oder zweiten Anbindungsbereich koppel- bzw. entkoppelbar.

Grundsätzlich ist eine Statik des Wohnraums unabhängig von dem Volumenelement gegeben. D.h. das Volumenelement bildet selbst keine tragende Struktur des Wohnraumes. Der jeweilige Anbindungsbereich kann dagegen mit einer tragenden Struktur des Wohnraumes mechanisch gekoppelt oder mit diesem in Kontakt, so dass Kräfte, die auf das Volumenelement wirken, zumindest teilweise über den jeweiligen Anbindungsbereich und damit über die tragende Struktur des Wohnraumes abgeleitet werden. Dabei können beispielsweise die Wand, die Decke und der Boden und somit auch die entsprechenden Übergänge jeweils eine tragende Struktur des Wohnraumes bilden.

Mit dem Kopplungselement ist in diesem Zusammenhang eine weitere Komponente benannt, die zwischen dem Volumenelement und dem jeweiligen Anbindungsbereich angeordnet und sowohl mit dem Volumenelement und dem Anbindungsbereich derart gekoppelt oder in Kontakt ist, dass auf das Volumenelement wirkende Kräfte über das Koppelelement in den Anbindungsbereich und damit über die tragende Struktur des Wohnraumes abgeleitet werden.

In einer weiteren vorteilhaften Ausgestaltung des ersten Aspekts ist zumindest ein Anbindungsbereich einer Decke des Wohnraumes zugeordnet. Das Volumenelement ist mit der zugeordneten Kante und/oder mit dem zu der zugeordneten Kante angrenzenden Befestigungsbereich der ersten oder zweiten Deckschicht mit dem zumindest einen Anbindungsbereich der Decke mittels eines Kopplungselementes koppelbar. Ist der Anbindungsbereich der Decke zugeordnet, kann das Kopplungselement beispielsweise als Seil, Gurt oder Stange ausgebildet sein. Dadurch kann eine besonders flexible Nutzung des Volumenelementes ermöglicht werden. Besonders vorteilhaft ist die Nutzung dann, wenn das zugeordnete Kopplungselement derart ausgebildet ist, dass das Volumenelement im aufgeblasenen und/oder evakuierten Zustand bei Nichtverwendung an die Decke des Wohnraumes bewegt werden kann.

In einer weiteren vorteilhaften Ausgestaltung des ersten Aspekts ist zumindest ein Anbindungsbereich einem Boden des Wohnraumes zugeordnet. Das Volumenelement ist mit der zugeordneten Kante und/oder mit dem zu der zugeordneten Kante angrenzenden Befestigungsbereich der ersten oder zweiten Deckschicht mit dem zumindest einen Anbindungsbereich des Bodens mittels eines Kopplungselementes koppelbar. In dieser Ausgestaltung kann das Kopplungselement beispielsweise eine Komponente sein, die das Volumenelement von dem Anbindungsbereich des Bodens auf einen vorgegebenen Abstand hält. So kann das Kopplungselement beispielsweise ein Möbelstück sein, wie z.B. ein Stuhl, ein Regal oder ein Schrank.

Die Erfindung zeichnet sich gemäß einem zweiten Aspekt aus durch ein Fahrzeug mit einem Wohnraum gemäß dem ersten Aspekt, wobei der Wohnraum als Fahrzeuginnenraum oder als eine mit dem Fahrzeug koppelbare Kabine ausgebildet ist. Insbesondere die Verwendung des einfachen und flexibel einsetzbaren Volumenelementes im Innenraum eines Fahrzeugs oder einer Kabine ist besonders vorteilhaft und erlaubt eine besonders effiziente Nutzung des Fahrzeuginnenraums. Vorzugsweise ist das Fahrzeug als Landfahrzeug, so z.B. Wohnmobil oder Wohnanhänger, ausgebildet. Die Kabine kann beispielsweise als eine Wohnkabine ausgebildet sein.

In einer weiteren vorteilhaften Ausgestaltung des zweiten Aspekts ist das Volumenelement als ein Bett und/oder eine Sitzgelegenheit für ein oder mehrere Personen ausgebildet. Dies erlaubt eine besonders gewichtseffiziente Umsetzung eines Bettes und/oder einer Sitzgelegenheit in einem Fahrzeug, da ein Gestell, z.B. Bett- oder Sitzgestell oder Lattenrost aufgrund der Druckfestigkeit und Biegesteifigkeit des Volumenelementes im aufgeblasenen und/oder evakuierten Nutzungszustand nicht erforderlich ist. Im Falle eine Nichtverwendung kann das als Bett und/oder Sitzgelegenheit ausgebildete Volumenelement im erschlafften Zustand platzsparend verstaut werden, so dass eine in diesem Bereich anderweitige Nutzung des Fahrzeuginnenraumes oder der Kabine möglich ist.

Weitere Vorteile und Merkmale der vorliegenden Erfindung ergeben sich aus der folgenden beispielhaften Beschreibung derzeit bevorzugter Ausführungsformen.
- Fig. 1: Schematische Darstellung eines Volumenelementes,
- Fig. 2: Darstellung eines Wohnraumes mit Volumenelement,
- Fig. 3: weitere Darstellung eines Wohnraumes mit Volumenelement,
- Fig. 4: Fahrzeug mit Wohnraum.

In den Figuren werden gleiche Bezugszeichen für gleiche oder zumindest ähnliche Elemente, Komponenten oder Aspekte verwendet. Es wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

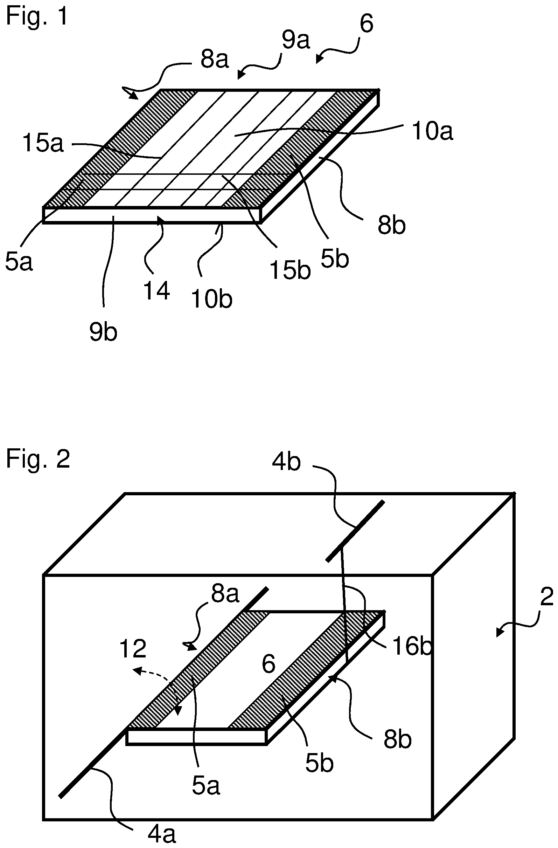

In Fig. 1 ist ein plattenförmiges Volumenelement 6 in einem aufgeblasenen und/oder evakuierten Zustand dargestellt. Das Volumenelement 6 weist in diesem Ausführungsbeispiel vier Kanten 8a, 8b, 9a, 9b auf. Die beiden sich gegenüberliegenden Kanten 8a, 8b können auch jeweils als Seitenkante bezeichnet werden. Die beiden sich gegenüberliegenden Kanten 9a, 9b können jeweils auch als Stirnkanten bezeichnet werden. Die Kanten 8a, 8b, 9a, 9b erstrecken sich in eine Dickenrichtung des Volumenelementes 6.

Das Volumenelement 6 weist ferner eine erste und eine zweite Deckschicht 10a, 10b auf. Dazwischen ist eine Zwischenstruktur 14 angeordnet. An den Kanten 8a, 8b, 9a, 9b kann jeweils eine Abschlusslasche verlaufen (nicht dargestellt). Diese verbindet an der jeweiligen Kante die erste Deckschicht 10a mit der zweiten Deckschicht 10b und ist mit der jeweiligen Deckschicht 10a, 10b jeweils fluiddicht verbunden, so z.B. verklebt, vernäht und/oder verschweißt. An den Ecken oder im Bereich der Ecken des Volumenelementes 6 sind die Abschlusslaschen miteinander fluiddicht verbunden. Alternativ kann die Abschlusslasche als Endlosmaterial ausgebildet sein und entlang aller Kanten 8a, 8b, 9a, 9b mit der ersten und zweiten Deckschicht 10a, 10b verbunden sein. Mittels der Abschlusslasche und der ersten und zweiten Deckschicht 10a, 10b kann somit im Volumenelement 6 ein fluiddichter Raum geschaffen werden, der mit einem Überdruck und/oder Unterdruck beaufschlagbar ist. Diesem fluiddichten Raum ist die Zwischenstruktur 14 des Volumenelementes 6 zugeordnet.

Die erste und zweite Deckschicht 10a, 10b ist flexibel ausgebildet und weist jeweils zumindest eine Materialschicht auf. Alternativ kann die jeweilige Deckschicht auch als Laminat mit mehreren Schichten ausgebildet sein. So kann die jeweilige Materialschicht der Deckschicht beispielsweise aus einem Kunststoffmaterial hergestellt sein, so z.B. aus PVC, Nylon, etc. Die Abschlusslasche kann aus demselben Material wie die erste oder zweite Deckschicht 10a, 10b hergestellt sein. Die jeweilige Abschlusslasche kann sich aber in der Oberflächentextur und -beschaffenheit von der ersten und zweiten Deckschicht 10a, 10b unterscheiden.

In dem aufgeblasenen und/oder evakuierten Nutzungszustand kann die erste und zweite Deckschicht 10a, 10b des Volumenelementes 6 sehr hart ausgebildet sein. Ist dies nicht erwünscht, kann die erste und/oder zweite Deckschicht 10a, 10b beispielsweise mit einer zusätzlichen Polsterung versehen sein, so z.B. Schaumstoff oder einer atmungsaktiven Beschichtung, so z.B. einer Baumwollpolsterung oder -beschichtung. Alternativ oder zusätzlich kann der jeweiligen Deckschicht eine weitere aufblasbare Nutzschicht zugeordnet sein, die im aufgeblasenen Zustand eine weichere Oberfläche bereitstellt. Damit kann eine Nutzung des Volumenelementes 6 direkt als Bett und/oder Sitzgelegenheit ermöglicht werden. Diese aufblasbare Nutzschicht kann auf der zugeordneten Deckschicht angeordnet oder in dieser integriert sein.

Die Zwischenstruktur 14 kann beispielsweise eine Vielzahl von Stabilisierungsfäden aufweisen, die die erste Deckschicht 10a mit der zweiten Deckschicht 10b mechanisch koppeln. Vorzugsweise sind die Stabilisierungsfäden in der ersten und zweiten Deckschicht 10a, 10b mit ihren jeweiligen Enden vernäht oder verklebt. Die Stabilisierungsfäden sind beispielsweise aus Nylon hergestellt. In dieser Ausführung mit Stabilisierungsfäden entspricht der Aufbau der Zwischenstruktur 14 einer sogenannten Drop-Stitch Struktur, die in der Regel ihre Festigkeit erlangt, wenn der fluiddichte Raum der Zwischenstruktur 14 mit einem Gas gefüllt, so z.B. Luft, und mit einem ausreichenden Überdruck beaufschlagt ist.

Vorzugsweise weisen die Stabilisierungsfäden gleiche Längen auf und geben dadurch maßgeblich den Abstand zwischen der ersten und zweiten Deckschicht 10a, 10b und somit die Dicke des Volumenelementes 6 in Dickenrichtung vor. So kann das Volumenelement 6 beispielsweise eine Dicke von etwa 10 cm aufweisen. Die Stabilisierungsfäden verlaufen typischerweise im aufgeblasenen Zustand auf kürzesten Weg zwischen der ersten und zweiten Deckschicht 10a, 10b, d.h. weisen einen relativ zu den Deckschichten senkrechten Verlauf aus. Alternativ oder zusätzlich können die Stabilisierungsfäden im aufgeblasenen Zustand aber auch einen relativ zu den Deckschichten anderen Winkel einnehmen, so z.B. einen X-förmigen Verlauf zwischen der ersten und zweiten Deckschicht 10a, 10b.

Ist die Zwischenstruktur 14 als Drop-Stitch Struktur ausgebildet, sind die erste und die zweite Deckschicht 10a, 10b typischerweise derart mechanisch gekoppelt, dass im aufgeblasenen Zustand die erste und zweite Deckschicht 10a, 10b über die Erstreckung der Zwischenstruktur 14 im Wesentlichen parallel verlaufen.

Der Zwischenstruktur 14 können mehrere Kammern zugeordnet sein, die jeweils fluidisch getrennt voneinander ausgebildet sind. Dabei ist jeder Kammer ein Ventil zugeordnet über welches die Kammer entweder mit einem Überdruck oder Unterdruck beaufschlagbar ist. Diese Kammern mit den jeweiligen Kammerwandungen bilden dabei zumindest teilweise eine mechanische Kopplung zwischen der ersten und zweiten Deckschicht 10a, 10b. Die jeweilige Kammer der Zwischenstruktur 14 kann dabei als Drop-Stitch Struktur ausgebildet sein und eine Vielzahl von Stabilisierungsfäden zwischen der ersten und zweiten Deckschicht 10a, 10b aufweisen. Damit kann die jeweilige Drop-Stitch Kammer mit einem zugeordneten Überdruck beaufschlagt werden.

Alternativ können der Zwischenstruktur 14 auch mehrere fluidisch getrennte Kammern zugeordnet sein, von denen einige mit einem Granulat gefüllt sind. Die mit einem Granulat gefüllten Kammern können dann mit einem Unterdruck beaufschlagt werden. Als Granulat kann ein Material verwendet werden, welches in einem evakuierten Zustand eine hohe Reibung zwischen den Granulatpartikeln bewirkt und somit einen sehr biegesteifen und druckstabilen Zustand einnimmt. Weitere Anforderungen an ein solches Granulat können ferner ein geringes Gewicht, Isolationseigenschaften, geringe Kosten, Verfügbarkeit, Umweltverträglichkeit etc. sein. Beispielsweise kann ein Kunststoff- oder Biogranulat oder andere Materialien verwendet werden.

Die nicht mit einem Granulat gefüllten Kammern werden dagegen vorzugsweise mit einem Überdruck beaufschlagt. Durch die Kombination von mit Granulat und einem Unterdruck beaufschlagbaren Kammern mit Kammern, die mit einem Überdruck beaufschlagbar sind, kann eine hohe Steifigkeit, insbesondere Druck- und Biegesteifigkeit, der Zwischenstruktur 14 und somit des Volumenelementes 6 erreicht werden. Vorzugsweise sind die evakuierbaren und mit Granulat gefüllten Kammern in der Nähe der Deckschichten und die aufblasbaren Kammern im Inneren des Volumenelementes angeordnet. Die mehreren Kammern können dabei in Längsrichtung des Volumenelementes 6 verlaufen.

Ist die Zwischenstruktur 14 aus der Kombination von mit Granulat und einem Unterdruck beaufschlagbaren Kammern mit Kammern, die mit einem Überdruck beaufschlagbar sind, ausgebildet, ist die erste und die zweite Deckschicht 10a, 10b vorzugsweise derart mechanisch gekoppelt, dass im aufgeblasenen und evakuierten Zustand die erste und die zweite Deckschicht 10a, 10b über die Erstreckung der Zwischenstruktur 14 im Wesentlichen parallel verlaufen.

An die erste Kante 8a grenzt ein erster Befestigungsbereich 5a. Ist die erste Kante 8a als Seitenkante ausgebildet, so verläuft ausgehend von der ersten Kante 8a der erste Befestigungsbereich 5a nur zum Teil über eine Breite des Volumenelementes 6. So kann der erste Befestigungsbereich 5a ausgehend von der als Seitenkante ausgebildeten ersten Kante 8a beispielsweise in einer Breite von 5 cm bis 20 cm parallel zu dem Verlauf der ersten Kante 8a verlaufen. Der erste Befestigungsbereich 5a ist der ersten und/oder zweiten Deckschicht 10a, 10b zugeordnet. Ist dagegen die erste Kante als Stirnkante ausgebildet, so verläuft ausgehend von dieser der erste Befestigungsbereich nur zum Teil über eine Länge des Volumenelementes 6, so z.B. in einer Breite von 5 cm bis 20 cm parallel zu dem Verlauf der ersten Kante.

Zusätzlich kann dem Volumenelement 6 ein zweiter Befestigungsbereich 5b zugeordnet sein, der an die als Seitenkante ausgebildete zweite Kante 8b angrenzt und ausgehend von der zweiten Kante 8b nur zum Teil über eine Breite des Volumenelementes 6, so z.B. ausgehend von der zweiten Kante 8b in einer Breite von 5 cm bis 20 cm parallel zu dem Verlauf der zweiten Kante 8b verläuft. Alternativ kann der zweite Befestigungsbereich auch an eine als Stirnkante ausgebildeten zweiten Kante angrenzen und nur zum Teil über eine Länge des Volumenelementes 6 verlaufen.

Ferner ist in Fig. 1 angedeutet, dass der ersten Deckschicht 10a mehrere Längsversteifungselemente 15a und mehrere Querversteifungselemente 15b zugeordnet sind. Sowohl die Längsversteifungselemente 15a als auch die Querversteifungselemente 15b können jeweils als Stabilisierungselemente bezeichnet werden, die in der Ebene der jeweiligen Deckschicht verlaufen. Beispielsweise ist das jeweilige Versteifungselement 15a, 15b als flexibles Faserband mit einem hohen Elastizitätsmodul und einer hohen Zugfestigkeit ausgebildet, so z.B. als Aramidfaserband. Das Volumenelement 6 kann entweder Längsversteifungselemente 15a oder Querversteifungselemente 15b auf oder in der ersten oder zweiten Deckschicht 10a, 10b angeordnet bzw. integriert aufweisen. Alternativ kann, wie in Fig. 1 dargestellt, dass Volumenelement 6 sowohl die Längs-- 15a als auch Querversteifungselemente 15b aufweisen. Dabei können die Längs- 15a und Querversteifungselemente 15b einer Deckschicht zugeordnet sein oder sich in jeglichen denkbaren Kombinationen auf die erste und zweite Deckschicht 10a, 10b verteilen. Grds. ist es auch möglich, dass die Stabilisierungselemente in der Ebene der zugeordneten Deckschicht schräg oder diagonal verlaufen. Auch eine als großflächig ausgebildete Faserlage kann auf oder in der jeweiligen Deckschicht integriert sein und als Stabilisierungselement dienen.

In Fig. 2 ist ein Wohnraum 2 mit zumindest einem Volumenelement 6 dargestellt. Der Wohnraum 2 weist mehrere Seitenwände und eine Decke, sowie einen Boden auf. Zumindest einer Wand des Wohnraumes 2 ist ein erster Anbindungsbereich 4a zugeordnet. Dieser Bereich kann beispielsweise als Befestigungsleiste mit Haken oder Ösen, als Stufe, oder anderweitig derart ausgebildet sein, dass an diesem das Volumenelement 6 mechanisch gekoppelt werden kann. Die Kopplung kann dabei derart erfolgen, dass das Volumenelement 6 direkt mittels der ersten Kante 8a an dem ersten Anbindungsbereich 4a gekoppelt werden kann. So kann die erste Kante 8a beispielweise Ring-Patches aufweisen, deren Ring in die Haken oder Ösen des ersten Anbindungsbereiches 4a greifen. Alternativ oder zusätzlich kann auch der erste Befestigungsbereich 5a entsprechende Befestigungsmittel umfassen, um das Volumenelement 6 an den ersten Anbindungsbereich 4a zu koppeln. Dabei muss die Kopplung nicht über die gesamte Länge der ersten Kante 8a erfolgen, sondern kann beispielsweise auch nur im Bereich der Ecken erfolgen. Dabei gilt, dass eine Kopplung an einer Ecke beiden die Ecke bildenden Kanten des Volumenelementes 6 zugeordnet ist. Grundsätzlich ist aber auch eine andere Verteilung passender Befestigungsmittel über die Länge der ersten Kante 8a möglich, um das Volumenelement 6 an den ersten Anbindungsbereich 4a zu koppeln. Auch kann die mechanische Kopplung derart ausgebildet sein, dass der erste Befestigungsbereich 5a auf dem ersten Anbindungsbereich 4a aufliegt, wenn dieses entsprechend in den Wohnraum 2 hineinragend ausgebildet ist

Eine direkte Kopplung bedeutet in diesem Zusammenhang, dass das Volumenelement 6 während der Kopplung direkt mit dem entsprechenden Anbindungsbereich in Kontakt ist, so dass auf das Volumenelement wirkende Kräfte über den jeweiligen Anbindungsbereich abgeleitet werden können.

Zusätzlich kann der Wohnraum 2 einen zweiten Anbindungsbereich 4b umfassen. In Fig. 2 ist dieser an der Decke des Wohnraumes 2 angeordnet. Das Volumenelement 6 umfasst zusätzlich zu der ersten Kante 8a auch eine zweite Kante 8b. Die zweite Kante 8b ist einer anderen Seite des Volumenelementes 6 zugeordnet und unterscheidet sich somit von der ersten Kante 8a. Die zweite Kante 8b ist nicht direkt mit dem zweiten Anbindungsbereich 4b gekoppelt, d.h. das Volumenelement 6 ist nicht direkt mit dem zweiten Anbindungsbereich 4b in Kontakt. Hier erfolgt die Kopplung des Volumenelementes 6 an den zweiten Anbindungsbereich 4b mittels eines zweiten Kopplungselementes 16b. Beispielsweise ist das zweite Kopplungselement 16b als ein oder mehrere Gurte oder Stangen ausgebildet, die den zweiten Anbindungsbereich 4b mit der zweiten Kante 8b des Volumenelementes 6 koppeln. Alternativ oder zusätzlich kann auch der zweite Befestigungsbereich 5b mit dem zweiten Kopplungselement 16b gekoppelt sein, um das Volumenelement 6 an den zweiten Anbindungsbereich 4b zu koppeln. Beispielsweise ist das zweite Kopplungselement 16bals zumindest ein Gurt oder eine Stange ausgebildet, der bzw. die zwischen dem zweiten Anbindungsbereich 4b und der zweiten Kkante 8b angeordnet ist und damit das Volumenelement 6 indirekt mit dem zweiten Anbindungsbereich 4b koppelt.

Das zweite Kopplungselement 16b ist vorzugsweise werkzeuglos mit dem Volumenelement 6 koppel- bzw. entkoppelbar. Dadurch kann bei einer Nichtverwendung des Volumenelementes 6 dieses beispielsweise von dem zweiten Kopplungselement 16b entkoppelt werden und danach beispielsweise an die Wand des ersten Anbindungsbereiches 4a geklappt werden (siehe Pfeil 12). Dies ist besonders vorteilhaft, da das Volumenelement 6 dafür nicht in den erschlafften Zustand überführt werden muss.

Das Volumenelement 6 kann darüber hinaus entsprechende Längs- und/oder Querversteifungselemente 15a, 15b entsprechend dem Ausführungsbeispiel in Fig. 1 auf oder in der ersten und/oder zweiten Deckschicht 10a, 10b umfassen (in Fig. 2 nicht dargestellt).

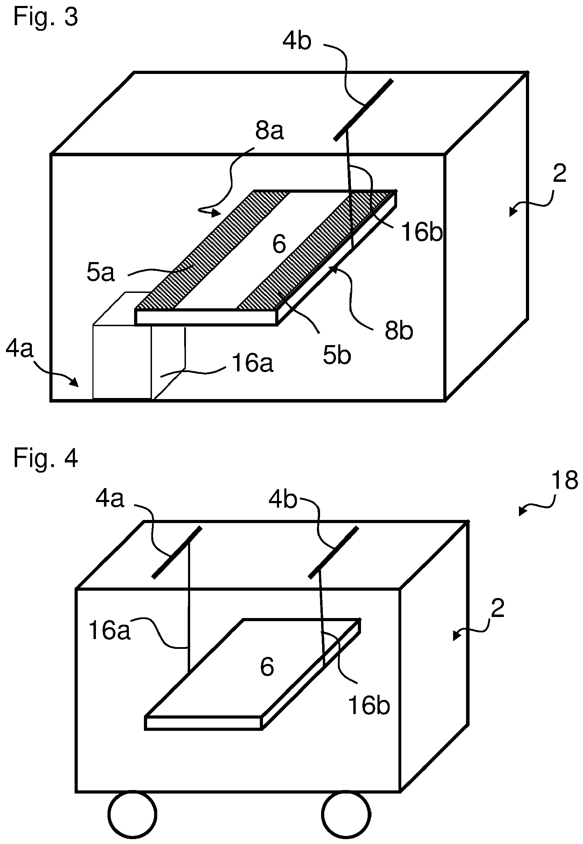

In Fig. 3 ist ein weiteres Ausführungsbeispiel eines Wohnraumes 2 mit dem Volumenelement 6 dargestellt. Hier ist der erste Anbindungsbereich 4a dem Boden des Volumenelementes 6 zugeordnet. Hier erfolgt die Kopplung zwischen dem ersten Anbindungsbereich 4a und der ersten Kante 8a des Volumenelementes 6 mittels eines ersten Kopplungselementes 16a. Beispielsweise ist das erste Kopplungselement 16a als ein Möbelstück, so z.B. Schrank ausgebildet, der zwischen dem ersten Anbindungsbereich 4a und der ersten Kante 8a oder dem ersten Befestigungsbereich 5a angeordnet ist und damit das Volumenelement 6 indirekt mit dem Boden des Volumenelementes 6 koppelt..

Auch hier kann das Volumenelement 6 entsprechende Längs- und/oder Querversteifungselemente 15a, 15b entsprechend dem Ausführungsbeispiel in Fig. 1 auf oder in der ersten und/oder zweiten Deckschicht 10a, 10b umfassen (in Fig. 3 nicht dargestellt).

In Fig. 4 ist ein Fahrzeug 18 dargestellt. Dieses umfasst einen Wohnraum 2 mit zumindest einem ersten Anbindungsbereich 4a und zumindest einem Volumenelement 6. Der Wohnraum 2 ist beispielsweise als Fahrzeuginnenraum oder als eine mit dem Fahrzeug 18 koppel- oder entkoppelbare Kabine, so z.B. Wohnkabine, ausgebildet. In diesem Ausführungsbeispiel ist der Wohnraum 2 ähnlich zu dem in Fig. 3 ausgebildet, mit dem Unterschied, dass der erste Anbindungsbereich 4a auch der Decke des Volumenelementes 6 zugeordnet ist. Auch hier erfolgt die Kopplung zwischen dem ersten Anbindungsbereich 4a und der ersten Kante 8a des Volumenelementes 6 mittels eines ersten Kopplungselementes 16a, welches analog zu dem zweiten Kopplungselement 16b beispielsweise als ein oder mehrere Gurte oder Stangen ausgebildet ist. Eine solche Kopplung des Volumenelementes 6 in dem Fahrzeuginnenraum oder der Kabine hat den Vorteil, dass das Volumenelement 6 bei Nichtgebrauch zu der Decke des Wohnraumes gezogen werden kann, womit zusätzlicher Nutzraum geschaffen werden kann.

Alternativ kann der als Fahrzuginnenraum oder als Kabine ausgebildete Wohnraum 2 aber auch anders ausgebildet sein, so z.B. analog zu dem Ausführungsbeispiel in Fig. 2.

Zusätzlich kann das Fahrzeug 18 weitere Volumenelemente 6 mit zugeordneten Anbindungsbereichen in dem Wohnraum 2 umfassen.

Auch hier kann das Volumenelement 6 in einem Fahrzeug 18 angeordnet entsprechende Längs- und/oder Querversteifungselemente 15a, 15b entsprechend dem Ausführungsbeispiel in Fig. 1 auf oder in der ersten und/oder zweiten Deckschicht 10a, 10b umfassen (in Fig. 4 nicht dargestellt).

Das Fahrzeug 18 ist vorzugsweise als Landfahrzeug, so z.B. als Kastenwagen, Wohnmobil oder Wohnanhänger, ausgebildet.

### Bezugszeichenliste

- 2: Wohnraum
- 4a, 4b: erster und zweiter Anbindungsbereich
- 5a, 5b: erster und zweiter Befestigungsbereich
- 6: Volumenelement
- 8a, 8b, 9a, 9b: Kanten
- 10a, 10b: erste und zweite Deckschicht
- 12: Pfeil
- 14: Zwischenstruktur
- 15a, 15b: Versteifungselemente
- 16a, 16b: erstes und zweites Kopplungselement
- 18: Fahrzeug

## Patentansprüche

1. Wohnraum (2) mit einem ersten Anbindungsbereich (4a) und einem aufblasbaren und/oder evakuierbaren plattenförmigen Volumenelement (6), das aus einer ersten flexiblen Deckschicht (10a) sowie einer zweiten flexiblen Deckschicht (10b) und einer dazwischen angeordneten Zwischenstruktur (14) gebildet ist, wobei die Zwischenstruktur (14) ausgebildet ist, die erste Deckschicht (10a) mit der zweiten Deckschicht (10b) mechanisch derart zu koppeln, dass in einem aufgeblasenen und/oder evakuierten Zustand die erste Deckschicht (10a) von der zweiten Deckschicht (10b) vorgegeben beabstandet ist, wobei das Volumenelement (6) ferner eine erste Kante (8a, 8b, 9a, 9b) aufweist und das Volumenelement (6) mit der ersten Kante (8a, 8b, 9a, 9b) und/oder mit einem zu der ersten Kante (8a, 8b, 9a, 9b) angrenzenden ersten Befestigungsbereich (5a) der ersten oder zweiten Deckschicht (10a, 10b) mit dem ersten Anbindungsbereich (4a) des Wohnraumes (2) direkt und/oder mittels eines ersten Kopplungselementes (16a) koppelbar ist, wobei sich bei einer Kopplung mittels des ersten Befestigungsbereiches (5a) dieser ausgehend von der ersten Kante (8a, 8b, 9a, 9b) nur zum Teil über die Gesamtlänge und/oder Gesamtbreite des Volumenelementes (6) erstreckt.

2. Wohnraum (2) nach Anspruch 1, bei dem der Zwischenstruktur (14) des Volumenelementes (6) mehrere fluidisch getrennte Kammern zugeordnet sind, wobei jede Kammer separat entweder aufblasbar oder evakuierbar ist.

3. Wohnraum (2) nach Anspruch 1 oder 2, bei dem die Zwischenstruktur (14) zumindest eine erste Kammer, die mit einem Überdruck beaufschlagbar ist, und zumindest eine zweite Kammer umfasst, die mit einem Granulat gefüllt und mit einem Unterdruck beaufschlagbar ist, wobei die erste Kammer von der zweiten Kammer fluidisch getrennt ist.

4. Wohnraum (2) nach Anspruch 1 oder 2, bei dem die Zwischenstruktur (14) derart ausgebildet ist, dass zwischen der ersten Deckschicht (10a) und der zweiten Deckschicht (10b) eine Vielzahl gleichlange Stabilisierungsfäden verlaufen.

5. Wohnraum (2) nach einem der vorstehenden Ansprüche, bei dem die Koppelbarkeit zwischen Volumenelement (6) und erstem Anbindungsbereich (4a) derart ausgebildet ist, dass das Volumenelement (6) mittels des ersten Befestigungsbereiches (5a) an dem ersten Anbindungsbereich (4a) direkt abstützbar ist.

6. Wohnraum (2) nach einem der vorstehenden Ansprüche, mit zumindest einem Stabilisierungselement (15a, 15b) vorgegebener Länge und Breite, das auf oder in der ersten oder zweiten Deckschicht (10a, 10b) angeordnet und in Längs- und/oder Querrichtung verläuft und dabei ausgebildet ist, im aufgeblasenen und/oder evakuierten Zustand eine zusätzliche Steifigkeit des Volumenelementes (6) zu bewirken.

7. Wohnraum (2) nach einem der vorstehenden Ansprüche, dem ein zweiter Anbindungsbereich (4b) zugeordnet ist, wobei das Volumenelement (6) eine zweite Kante (8a, 8b, 9a, 9b) aufweist, die sich von der ersten Kante (8a, 8b, 9a, 9b) unterscheidet, und das Volumenelement (6) mit der zweiten Kante (8a, 8b, 9a, 9b) und/oder mit einem zu der zweiten Kante (8a, 8b, 9a, 9b) angrenzenden zweiten Befestigungsbereich (5b) der ersten oder zweiten Deckschicht (10a, 10b) mit dem zweiten Anbindungsbereich (4b) des Wohnraumes (2) direkt und/oder mittels eines zweiten Kopplungselementes (16b) koppelbar ist.

8. Wohnraum (2) nach Anspruch 7, bei dem der erste und/oder zweite Anbindungsbereich (4a, 4b) einer Wand oder einer Decke oder einem Boden des Wohnraumes (2) zugeordnet ist.

9. Wohnraum (2) nach einem der vorstehenden Ansprüche, bei dem zumindest ein Anbindungsbereich (4a, 4b) einer Decke des Wohnraumes (2) zugeordnet ist, wobei das Volumenelement (6) mit der zugeordneten Kante (8a, 8b, 9a, 9b) und/oder mit dem zu der zugeordneten Kante (8a, 8b, 9a, 9b) angrenzenden Befestigungsbereich (5a, 5b) der ersten oder zweiten Deckschicht (10a, 10b) mit dem zumindest einen Anbindungsbereich (4a, 4b) der Decke mittels eines Kopplungselementes (16a, 16b) koppelbar ist.

10. Wohnraum (2) nach einem der vorstehenden Ansprüche, bei dem zumindest ein Anbindungsbereich (4a, 4b) einem Boden des Wohnraumes (2) zugeordnet ist, wobei das Volumenelement (6) mit der zugeordneten Kante (8a, 8b, 9a, 9b) und/oder mit dem zu der zugeordneten Kante (8a, 8b, 9a, 9b) angrenzenden Befestigungsbereich (5a, 5b) der ersten oder zweiten Deckschicht (10a, 10b) mit dem zumindest einen Anbindungsbereich (4a, 4b) des Bodens mittels eines Kopplungselementes (16a, 16b) koppelbar ist.

11. Fahrzeug mit einem Wohnraum (2) nach einem der vorstehenden Ansprüche, bei dem der Wohnraum (2) als Fahrzeuginnenraum oder als eine mit dem Fahrzeug koppelbare Kabine ausgebildet ist.

12. Fahrzeug nach Anspruch 11, bei dem das Volumenelement (6) als ein Bett und/oder eine Sitzgelegenheit für ein oder mehrere Personen ausgebildet ist.
